# EUROPEAN PATENT SPECIFICATION

(11) **EP 3 538 310 B1**
(45) Date of publication and mention of the grant of the patent: **16.08.2023**
(21) Application number: 17870176.9
(22) Date of filing: 10.11.2017
(51) Int. Cl.: B23D 51/10, B23D 49/10

(54) **BLADE CLAMP FOR A RECIPROCATING POWER TOOL AND POWER TOOL**
BLATTKLEMME FÜR EIN HIN- UND HERBEWEGBARES ELEKTROWERKZEUG UND ELEKTROWERKZEUG
SERRE-LAME POUR OUTIL ÉLECTRIQUE À MOUVEMENT ALTERNATIF ET OUTIL ÉLECTRIQUE

(30) Priority: 10.11.2016 US 201662420007 P
(43) Date of publication of application: 18.09.2019
(73) Proprietor: Milwaukee Electric Tool Corporation, Brookfield, WI 53005 (US)
(72) Inventor: BANHOLZER, Hans, T., Milwaukee, WI 53222 (US)
(74) Representative: Novagraaf Group
(86) International application number: PCT/US2017/061022
(87) International publication number: WO 2018/089746

(56) References cited:
- EP-A1- 2 554 314
- WO-A1-03/047817
- WO-A2-2004/062862
- US-A1- 2009 071 016
- US-A1- 2009 277 022
- US-A1- 2010 031 512
- US-A1- 2013 247 392
- US-B1- 6 209 208

## Description

### CROSS-REFERENCE TO RELATED APPLICATIONS

This application claims priority to co-pending U.S. Provisional Patent Application No. 62/420,007, filed on November 10, 2016.

### FIELD OF THE INVENTION

The present invention relates to reciprocating power tools, and more particularly to blade clamps for quickly and easily replacing and securing a saw blade to a spindle of a reciprocating saw, and even more particularly to a blade clamp for removably coupling a saw blade to a spindle of a reciprocating power tool, and to a reciprocating power tool.

### BACKGROUND OF THE INVENTION

Reciprocating tools, such as reciprocating saws, include removable blades to permit the use of different types of blades and to allow for replacement of worn or damaged blades. Accordingly, reciprocating saws typically include a blade mounting system that allows for blade replacement while securely coupling the blade to the tool.

Document EP 2 554 314 A1 discloses a blade clamp for removably coupling a saw blade to a spindle of a reciprocating power tool, the blade clamp comprising an actuator rotatable about the spindle, the actuator including a first cam; and a locking member movable relative to the spindle between a locking position and a release position in response to rotation of the actuator, the locking member including a first section defining a first diameter that is constant along a length of the first section, a second section adjacent the first section and defining a second diameter that decreases along a length of the second section, and a third section adjacent the second section and defining a third diameter that is constant along a length of the third section, wherein the third section of the locking member is engageable with the saw blade to couple the saw blade to the spindle when the locking member is in the locking position, wherein the locking member further includes a first end, a second end opposite the first end, and a rounded head at the first end, wherein the third section extends from the second end to the second section, and wherein the first cam is configured to engage the rounded head to move the locking member from the release position toward the locking position in response to rotation of the actuator in a second direction.

Document EP 2 554 314 A1 also discloses a reciprocating power tool comprising a spindle including a slot configured to receive a saw blade; an actuator rotatable about the spindle, the actuator including a first cam; a blade clamp configured to removably couple the saw blade to the spindle, the blade clamp including a locking member movable relative to the spindle between a locking position in which the locking member extends into the slot and a release position in which the locking member is retracted from the slot, the locking member including a first section having a generally cylindrical shape, a second section extending from the first section and having a generally frustoconical shape, and a third section extending from the second section and having a generally cylindrical shape, wherein the third section of the locking member is engageable with the saw blade to couple the saw blade to the spindle when the locking member is in the locking position, wherein the locking member further includes a first end, a second end opposite the first end. a rounded head at the first end. wherein the third section extends from the second end to the second section, and wherein the first cam is configured to engage the rounded head to move the locking member from the release position toward the locking position in response to rotation of the actuator in a second direction.

### SUMMARY OF THE INVENTION

The present invention provides, in one aspect, a blade clamp for removably coupling a saw blade to a spindle of a reciprocating power tool. The blade clamp includes an actuator rotatable about the spindle, the actuator including a first cam and a second cam, and a locking member movable relative to the spindle between a locking position and a release position in response to rotation of the actuator. The locking member has a first section defining a first diameter that is constant along a length of the first section. The locking member also has a second section adjacent the first section and defining a second diameter that decreases along a length of the second section. The locking member also has a third section adjacent the second section and defining a third diameter that is constant along a length of the third section. The third section of the locking member is engageable with the saw blade to couple the saw blade to the spindle when the locking member is in the locking position. The locking member includes a first end, a second end opposite the first end, and a rounded head at the first end. The locking member also includes a flange adjacent the rounded head, the flange having a non-circular cross-sectional shape. The third section extends from the second end to the second section. The first section extends from the flange to the second section. The second cam is configured to engage the flange to move the locking member from the locking position toward the release position in response to rotation of the actuator in a first direction. The first cam is configured to engage the rounded head to move the locking member from the release position toward the locking position in response to rotation of the actuator in a second direction. A spring automatically rotates the second cam around the spindle to cause the first cam to move the locking member from the release position toward the locking position.

The present invention provides, in another aspect, a reciprocating power tool including a spindle with a slot configured to receive a saw blade, an actuator rotatable about the spindle, the actuator including a first cam and a second cam, and a blade clamp configured to removably couple the saw blade to the spindle. The blade clamp includes a locking member movable relative to the spindle between a locking position in which the locking member extends into the slot and a release position in which the locking member is retracted from the slot. The locking member has a first section with a generally cylindrical shape, a second section extending from the first section with a generally frustoconical shape, and a third section extending from the second section with a generally cylindrical shape. The third section of the locking member is engageable with the saw blade to couple the saw blade to the spindle when the locking member is in the locking position. The locking member includes a first end, a second end opposite the first end, a rounded head at the first end, and a flange adjacent the rounded head. The flange has a non-circular cross-sectional shape. The third section extends from the second end to the second section. The first section extends from the flange to the second section. The second cam is configured to engage the flange to move the locking member from the locking position toward the release position in response to rotation of the actuator in a first direction. The first cam is configured to engage the rounded head to move the locking member from the release position toward the locking position in response to rotation of the actuator in a second direction. A spring automatically rotates the second cam around the spindle to cause the first cam to move the locking member from the release position toward the locking position.

Other features and aspects of the invention will become apparent by consideration of the following detailed description and accompanying drawings.

### BRIEF DESCRIPTION OF THE DRAWINGS

Fig. 1 is a side view of a reciprocating power tool including a blade clamp according to an embodiment of the invention.
Fig. 2 is a perspective view of a spindle and the blade clamp of the reciprocating power tool shown in Fig. 1.
Fig. 3 is cross-sectional view of the spindle and the blade clamp shown in Fig. 2.
Fig. 4 is a perspective view of a pin of the blade clamp.
Fig. 5 is a side view of the pin of Fig. 4.
Fig. 6 is a cross-sectional view of the pin of Fig. 4 received in an aperture of a blade.
Fig. 7 is an exploded view of the spindle and the blade clamp of Fig. 2.

Before any embodiments of the invention are explained in detail, it is to be understood that the invention is not limited in its application to the details of construction and the arrangement of components set forth in the following description or illustrated in the following drawings. The invention is capable of other embodiments and of being practiced or of being carried out in various ways. Also, it is to be understood that the phraseology and terminology used herein is for the purpose of description and should not be regarded as limiting.

### DETAILED DESCRIPTION

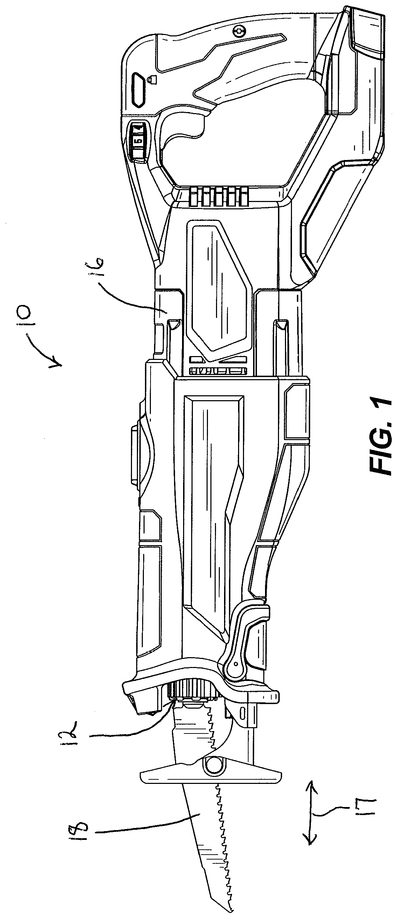

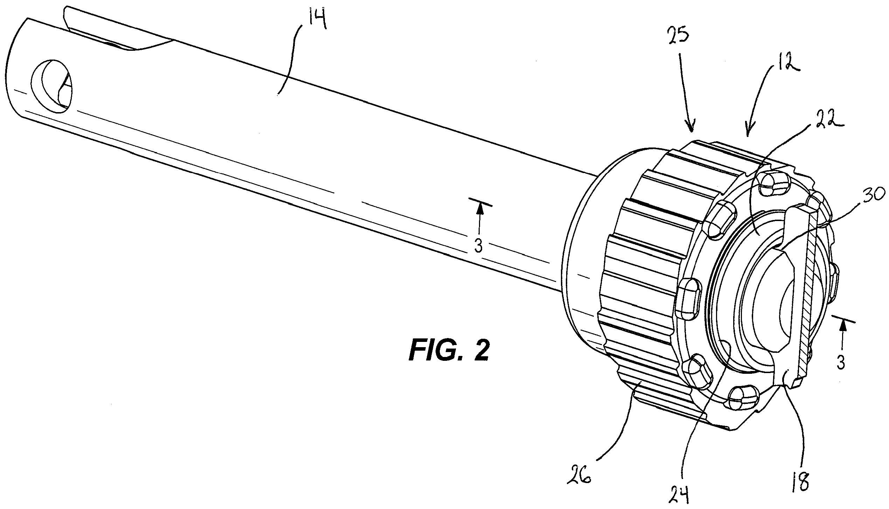

Fig. 1 illustrates a reciprocating power tool 10 including a blade clamp 12 according to one embodiment of the invention. The illustrated reciprocating power tool is a reciprocating saw 10. However, in other embodiments, other reciprocating power tools may include the blade clamp 12 described below. Referring to Figs. 1 and 2, the saw 10 includes a spindle 14 and a housing 16. The spindle 14 is reciprocated in the direction of arrows 17 relative to the housing 16 by the saw 10. The blade clamp 12 couples a blade 18 to the spindle 14 so that the blade 18 reciprocates with the spindle 14. The blade clamp 12 also allows a user to remove and replace the blade 18.

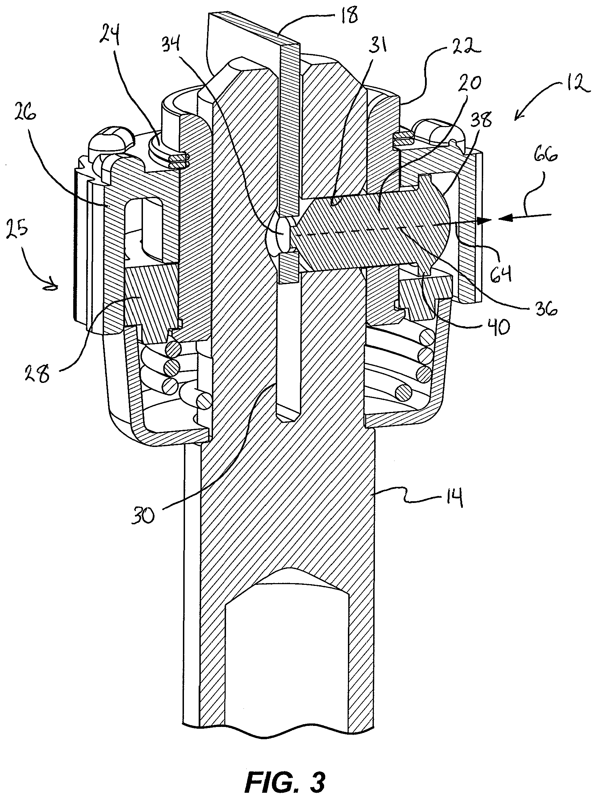

Referring to Fig. 3, the blade clamp 12 includes a locking member or pin 20, a sleeve 22, a retaining ring 24, and an actuator 25. In the illustrated embodiment, the actuator 25 includes a first cam 26, and a second cam 28. The sleeve 22 couples the blade clamp 12 to the spindle 14 via the pin 20. The retaining ring 24 couples the actuator 25 to the sleeve 22 such that the actuator 25 is rotatable relative to the sleeve 22 and around the spindle 14. The spindle 14 includes a longitudinally-extending slot 30 and an aperture 31 that extends into the slot 30. As will be discussed in more detail below, the pin 20 is linearly movable along the aperture 31 between a locking position (Fig. 3) in which the pin 20 projects into the slot 30 to couple the blade 18 to the spindle 14 and a release position in which the pin 20 is retracted from the slot 30 to permit removal of the blade 18.

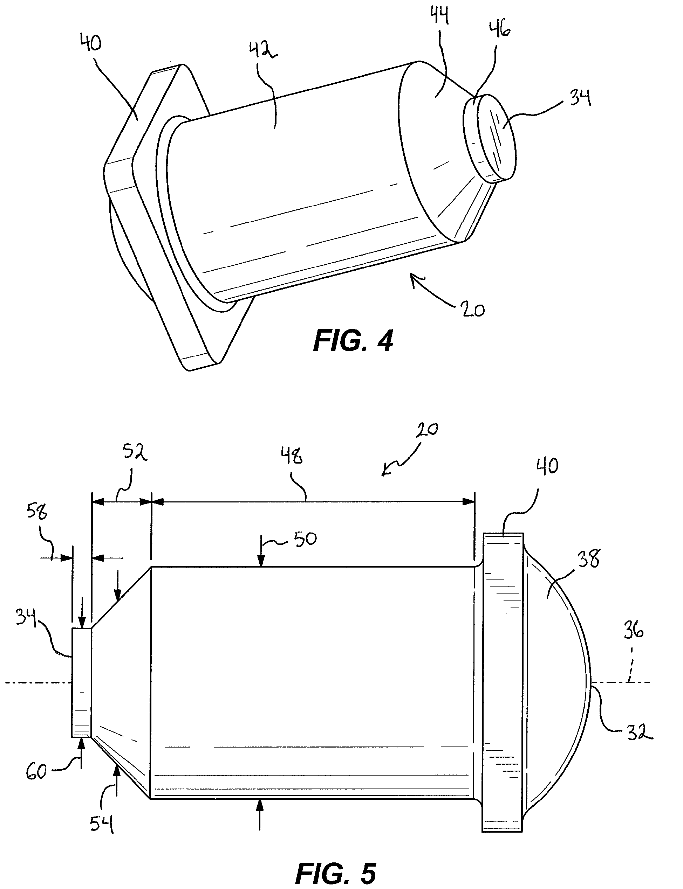

Referring to Fig. 5, the pin 20 includes a first end 32, a second end 34, and a longitudinal axis 36 that extends centrally through the pin 20 and through the ends 32 and 34. The pin 20 includes a rounded head 38 at the first end 32 and a flange 40 adjacent the rounded head 38. In the illustrated embodiment, the flange 40 has a generally square cross-sectional shape. In other embodiments, the flange 40 can have other non-circular cross-sectional shapes or a circular cross-sectional shape. Alternatively, the pin 20 may not include the flange 40 in some embodiments. Between the first end 32 and the second end 34 (and, in the illustrated embodiment, between the flange 40 and the second end 34), the pin 20 includes a first section 42, a second section 44 adjacent the first section 42, and a third section 46 adjacent the second section 44. The first section 42 extends from the flange 40 a length 48 measured parallel to the longitudinal axis 36 of the pin 20. The illustrated first section 42 is generally cylindrical and defines a diameter 50 measured normal to the axis 36. In the illustrated embodiment, the diameter 50 is constant along substantially the entire length 48 of the first section 42. In other embodiments, the first section 42 can have other cross-sectional shapes, such as square, rectangular, oval etc. However, the outer dimension, the diameter 50 in the illustrated embodiment, is preferably constant regardless of the cross-sectional shape.

The second section 44 of the pin 20 extends from the first section 42 opposite the flange 40. The second section 44 extends from the first section 42 a length 52 measured parallel to the axis 36. The length 52 of the second section 44 is less than the length 48 of the first section 42. The illustrated second section 44 has a generally frustoconical shape with a diameter 54 measured normal to the axis 36. As such, the diameter 54 of the second section 44 in the illustrated embodiment decreases at constant rate in a direction from the first section 42 toward the third section 46 of the pin 20 along the axis 36. In other embodiments, the second section 44 can have other cross-sectional shapes, such as square, rectangular, oval etc. However, the outer dimension, (i.e. the diameter 54 in the illustrated embodiment), generally decreases at a constant rate regardless of the cross-sectional shape. In other embodiments, the outer dimension 54 of the second section 44 can decrease at a variable rate in a direction from the first section 42 toward the third section 46 of the pin 20 along the axis 36. For example, the second section 44 may have a curved or segmented profile that generally tapers inward from the first section 42 toward the third section 46.

With continued reference to Fig. 5, the third section 46 of the pin 20 extends from the second section 44 opposite the first section 42. The third section 46 extends from the second section 44 a length 58 measured parallel to the axis 36. In the illustrated embodiment, the length 58 of the third section 46 preferably less than the length 52 of the second section 44; however, in other embodiments, the length 58 of the third section 46 may be equal to or greater than the length 52 of the second section 44. The illustrated third section 46 is generally cylindrical and defines diameter 60 measured normal to the axis 36. In the illustrated embodiment, the diameter 60 is constant along substantially the entire length 58 of the third section 46. In other embodiments, the third section 46 can have other cross-sectional shapes, such as square, rectangular, oval etc. However, the outer dimension, (i.e. the diameter 60 in the illustrated embodiment), is preferably constant regardless of the cross-sectional shape.

Referring to Fig. 3, to remove the blade 18 from the slot 30 in the spindle 14, the user rotates the first cam 26 around the spindle 14. This rotation causes the second cam 28 to also rotate, which causes the first cam 26 and the second cam 28 to push the flange 40 of the pin 20 in the direction of arrow 64 in Fig. 3. This causes the pin 20 to move in the direction of arrow 64 and retract out of the slot 30 to the release position, allowing the user to remove the blade 18. In some embodiments, the user may pull on the blade 18, and the blade 18 will bear against the second section 44 of the pin 20 and manually push the pin 20 in the direction of arrow 64 to permit removal of the blade 18.

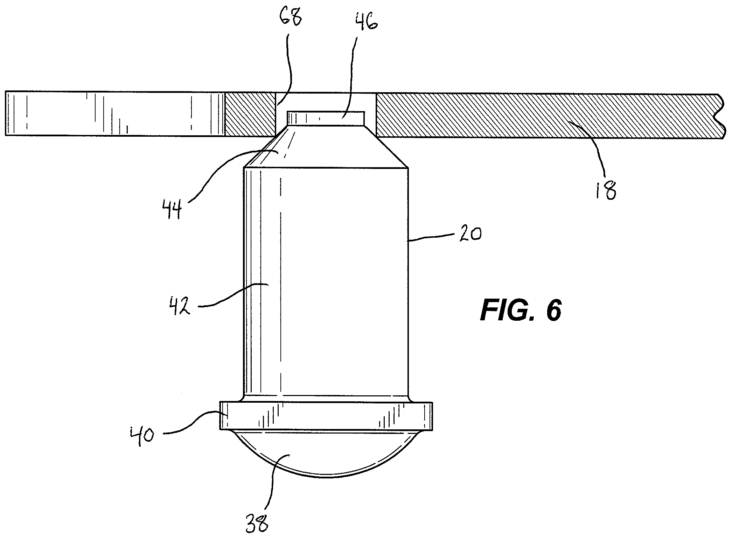

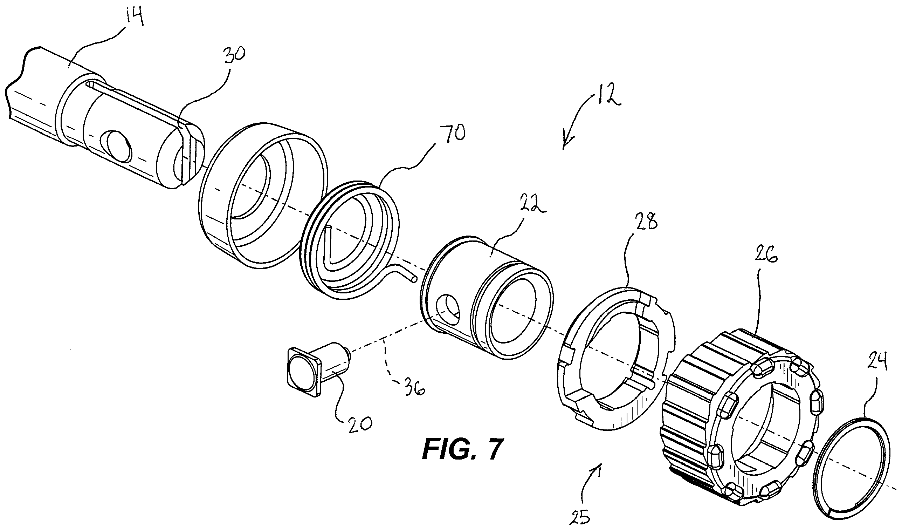

With the pin 20 out of the slot 30, the user inserts a new blade 18 and releases the first cam 26. A spring 70 (Fig. 7), which is a torsion spring in the illustrated embodiment, automatically rotates the second cam 28 around the spindle 14. This rotation causes the first cam 26 to push on the head 38 of the pin 20, which pushes the pin 20 in the direction of arrow 66 in Fig. 3. Movement of the pin 20 in the direction of arrow 66 moves the pin 20 back into the slot 30 to the locking position (Figs. 3 and 6). With the blade 18 in the slot 30, the third section 46 and at least a portion of the second section 44 of the pin 20 are received in an aperture 68 (Fig. 6) of the blade 18 and engageable with the blade 18 to couple the blade 18 to the spindle 14 for use with the saw 10.

The constant diameter 60 of the third section 46 of the pin 20 advantageously provides a more secure attachment of the blade 18 to the spindle 14. The attachment is stronger and able to better withstand forces during use of the saw 10 that tend to pull the blade 18 out of the slot 30 in the spindle 14. Accordingly, the blade clamp 12 allows the user to quickly and easily replace the blade 18 without the use of tools such as wrenches, screwdrivers, etc. and yet the blade 18 is firmly held in position by the clamp 12 including the pin 20.

Various features of the invention are set forth in the following claims.

## Claims

1. A blade clamp (12) for removably coupling a saw blade (18) to a spindle (14) of a reciprocating power tool, the blade clamp comprising:
an actuator (25) rotatable about the spindle, the actuator including a first cam (26) and a second cam (28); and
a locking member (20) movable relative to the spindle between a locking position and a release position in response to rotation of the actuator, the locking member including
a first section (42) defining a first diameter that is constant along a length of the first section,
a second section (44) adjacent the first section and defining a second diameter that decreases along a length of the second section, and
a third section (46) adjacent the second section and defining a third diameter that is constant along a length of the third section,
wherein the third section of the locking member is engageable with the saw blade to couple the saw blade to the spindle when the locking member is in the locking position,
wherein the locking member further includes a first end (32), a second end (34) opposite the first end, and a rounded head (38) at the first end, and a flange (40) adjacent the rounded head, the flange having a non-circular cross-sectional shape,
wherein the third section extends from the second end to the second section,
wherein the first section extends from the flange to the second section,
wherein the second cam is configured to engage the flange to move the locking member from the locking position toward the release position in response to rotation of the actuator in a first direction,
wherein the first cam is configured to engage the rounded head to move the locking member from the release position toward the locking position in response to rotation of the actuator in a second direction, and
wherein a spring (70) automatically rotates the second cam around the spindle to cause the first cam to move the locking member from the release position toward the locking position.

2. The blade clamp of claim 1, wherein the second section (44) is generally frustoconical.

3. The blade clamp of claim 1, wherein the third section (46) is generally cylindrical.

4. The blade clamp of claim 1, wherein the second diameter decreases along the length of the second section (44) at a constant rate.

5. The blade clamp of claim 1, wherein the locking member (20) is linearly movable between the locking position and the release position.

6. The blade clamp of claim 1, wherein the length of the second section (44) is less than the length of the first section (42).

7. The blade clamp of claim 1, wherein the length of the third section (46) is less than the length of the second section (44).

8. A reciprocating power tool (10) comprising:
a spindle (14) including a slot (30) configured to receive a saw blade (18);
an actuator (25) rotatable about the spindle, the actuator including a first cam (26) and a second cam (28);
a blade clamp (12) configured to removably couple the saw blade to the spindle, the blade clamp including a locking member (20) movable relative to the spindle between a locking position in which the locking member extends into the slot and a release position in which the locking member is retracted from the slot, the locking member including
a first section (42) having a generally cylindrical shape
a second section (44) extending from the first section and having a generally frustoconical shape, and
a third section (46) extending from the second section and having a generally cylindrical shape,
wherein the third section of the locking member is engageable with the saw blade to couple the saw blade to the spindle when the locking member is in the locking position,
wherein the locking member further includes a first end (32), a second end (34) opposite the first end, a rounded head (38) at the first end, and a flange (40) adjacent the rounded head, the flange having a non-circular cross-sectional shape,
wherein the third section extends from the second end to the second section,
wherein the first section extends from the flange to the second section,
wherein the second cam is configured to engage the flange to move the locking member from the locking position toward the release position in response to rotation of the actuator in a first direction,
wherein the first cam is configured to engage the rounded head to move the locking member from the release position toward the locking position in response to rotation of the actuator in a second direction, and
wherein a spring (70) automatically rotates the second cam around the spindle to cause the first cam to move the locking member from the release position toward the locking position.

9. The reciprocating power tool of claim 8, wherein at least a portion of the second section (44) is engageable with the saw blade (18) when the locking member (20) is in the locking position.

10. The reciprocating power tool of claim 8, wherein the first section (42) defines a first diameter that is constant along a length of the first section, wherein the second section (44) defines a second diameter that decreases along a length of the second section, and wherein the third section (46) defines a third diameter that is constant along a length of the third section,

11. The reciprocating power tool of claim 10, wherein the second diameter decreases along the length of the second section (44) at a constant rate.

12. The reciprocating power tool of claim 10, wherein the length of the second section (44) is less than the length of the first section (42), and wherein the length of the third section (46) is less than the length of the second section.

## Patentansprüche

1. Blattklemme (12) zum abnehmbaren Verbinden eines Sägeblatts (18) mit einer Spindel (14) eines Elektrowerkzeugs mit hin- und hergehender Bewegung, die Blattklemme umfassend:
einen Aktuator (25), der um die Spindel drehbar ist, wobei der Aktuator einen ersten Nocken (26) und einen zweiten Nocken (28) einschließt; und
ein Verriegelungselement (20), das als Reaktion auf die Drehung des Aktuators relativ zu der Spindel zwischen einer Verriegelungsposition und einer Freigabeposition beweglich ist, wobei das Verriegelungselement einschließt
einen ersten Abschnitt (42), der einen ersten Durchmesser definiert, der entlang einer Länge des ersten Abschnitts konstant ist,
einen zweiten Abschnitt (44), der an den ersten Abschnitt angrenzt und einen zweiten Durchmesser definiert, der entlang einer Länge des zweiten Abschnitts abnimmt, und
einen dritten Abschnitt (46), der an den zweiten Abschnitt angrenzt und einen dritten Durchmesser definiert, der entlang einer Länge des dritten Abschnitts konstant ist,
wobei der dritte Abschnitt des Verriegelungselements mit dem Sägeblatt gekoppelt werden kann, um das Sägeblatt mit der Spindel zu verbinden, wenn sich das Verriegelungselement in der Verriegelungsposition befindet,
wobei das Verriegelungselement ferner ein erstes Ende (32), ein zweites Ende (34) gegenüber dem ersten Ende und einen abgerundeten Kopf (38) an dem ersten Ende und einen Flansch (40) angrenzend an dem abgerundeten Kopf einschließt, wobei der Flansch eine nicht kreisförmige Querschnittsform aufweist,
wobei sich der dritte Abschnitt von dem zweiten Ende zu dem zweiten Abschnitt erstreckt,
wobei sich der erste Abschnitt von dem Flansch bis zu dem zweiten Abschnitt erstreckt,
wobei der zweite Nocken so konfiguriert ist, dass er mit dem Flansch koppelt, um das Verriegelungselement als Reaktion auf die Drehung des Aktuators in eine erste Richtung von der Verriegelungsposition in Richtung der Freigabeposition zu bewegen,
wobei der erste Nocken so konfiguriert ist, dass er mit dem abgerundeten Kopf koppelt, um das Verriegelungselement als Reaktion auf die Drehung des Aktuators in eine zweite Richtung von der Freigabeposition in Richtung der Verriegelungsposition zu bewegen, und
wobei eine Feder (70) den zweiten Nocken automatisch um die Spindel dreht, um den ersten Nocken zu veranlassen, das Verriegelungselement aus der Freigabeposition in Richtung der Verriegelungsposition zu bewegen.

2. Blattklemme nach Anspruch 1, wobei der zweite Abschnitt (44) allgemein kegelstumpfförmig ist.

3. Blattklemme nach Anspruch 1, wobei der dritte Abschnitt (46) allgemein zylindrisch ist.

4. Blattklemme nach Anspruch 1, wobei der zweite Durchmesser entlang der Länge des zweiten Abschnitts (44) mit konstanter Geschwindigkeit abnimmt.

5. Blattklemme nach Anspruch 1, wobei das Verriegelungselement (20) linear zwischen der Verriegelungsposition und der Freigabeposition beweglich ist.

6. Blattklemme nach Anspruch 1, wobei die Länge des zweiten Abschnitts (44) geringer ist als die Länge des ersten Abschnitts (42).

7. Blattklemme nach Anspruch 1, wobei die Länge des dritten Abschnitts (46) geringer ist als die Länge des zweiten Abschnitts (44).

8. Elektrowerkzeug mit hin- und hergehender Bewegung (10), umfassend:
eine Spindel (14), die einen Schlitz (30) einschließt, der konfiguriert ist, um ein Sägeblatt (18) aufzunehmen;
einen Aktuator (25), der um die Spindel drehbar ist, wobei der Aktuator einen ersten Nocken (26) und einen zweiten Nocken (28) einschließt;
eine Blattklemme (12), die so konfiguriert ist, dass sie das Sägeblatt abnehmbar mit der Spindel verbindet, wobei die Blattklemme ein Verriegelungselement (20) einschließt, das relativ zu der Spindel zwischen einer Verriegelungsposition, in der das Verriegelungselement in den Schlitz hineinragt, und einer Freigabeposition, in der das Verriegelungselement aus dem Schlitz herausgezogen ist, beweglich ist, wobei das Verriegelungselement Folgendes einschließt
einen ersten Abschnitt (42), der eine allgemein zylindrische Form aufweist
einen zweiten Abschnitt (44), der sich von dem ersten Abschnitt aus erstreckt und eine allgemein kegelstumpfförmige Form aufweist, und
einen dritten Abschnitt (46), der sich von dem zweiten Abschnitt aus erstreckt und eine allgemein zylindrische Form aufweist,
wobei der dritte Abschnitt des Verriegelungselements mit dem Sägeblatt gekoppelt werden kann, um das Sägeblatt mit der Spindel zu verbinden, wenn sich das Verriegelungselement in der Verriegelungsposition befindet,
wobei das Verriegelungselement ferner ein erstes Ende (32), ein zweites Ende (34) gegenüber dem ersten Ende, einen abgerundeten Kopf (38) an dem ersten Ende und einen Flansch (40) angrenzend an dem abgerundeten Kopf einschließt, wobei der Flansch eine nicht kreisförmige Querschnittsform aufweist,
wobei sich der dritte Abschnitt von dem zweiten Ende zu dem zweiten Abschnitt erstreckt,
wobei sich der erste Abschnitt von dem Flansch bis zu dem zweiten Abschnitt erstreckt,
wobei der zweite Nocken so konfiguriert ist, dass er mit dem Flansch koppelt, um das Verriegelungselement als Reaktion auf die Drehung des Aktuators in eine erste Richtung von der Verriegelungsposition in Richtung der Freigabeposition zu bewegen,
wobei der erste Nocken so konfiguriert ist, dass er mit dem abgerundeten Kopf koppelt, um das Verriegelungselement als Reaktion auf die Drehung des Aktuators in eine zweite Richtung von der Freigabeposition in Richtung der Verriegelungsposition zu bewegen, und
wobei eine Feder (70) den zweiten Nocken automatisch um die Spindel dreht, um den ersten Nocken zu veranlassen, das Verriegelungselement aus der Freigabeposition in Richtung der Verriegelungsposition zu bewegen.

9. Elektrowerkzeug mit hin- und hergehender Bewegung nach Anspruch 8, wobei mindestens ein Teil des zweiten Abschnitts (44) mit dem Sägeblatt (18) gekoppelt werden kann, wenn sich das Verriegelungselement (20) in der Verriegelungsposition befindet.

10. Elektrowerkzeug mit hin- und hergehender Bewegung nach Anspruch 8, wobei der erste Abschnitt (42) einen ersten Durchmesser definiert, der entlang einer Länge des ersten Abschnitts konstant ist, wobei der zweite Abschnitt (44) einen zweiten Durchmesser definiert, der entlang einer Länge des zweiten Abschnitts abnimmt, und wobei der dritte Abschnitt (46) einen dritten Durchmesser definiert, der entlang einer Länge des dritten Abschnitts konstant ist,

11. Elektrowerkzeug mit hin- und hergehender Bewegung nach Anspruch 10, wobei der zweite Durchmesser entlang der Länge des zweiten Abschnitts (44) mit konstanter Geschwindigkeit abnimmt.

12. Elektrowerkzeug mit hin- und hergehender Bewegung nach Anspruch 10, wobei die Länge des zweiten Abschnitts (44) geringer ist als die Länge des ersten Abschnitts (42), und wobei die Länge des dritten Abschnitts (46) geringer ist als die Länge des zweiten Abschnitts.

## Revendications

1. Serre-lame (12) permettant d'accoupler de manière amovible une lame de scie (18) à une broche (14) d'un outil électrique à mouvement alternatif, le serre-lame comprenant :
un actionneur (25) pouvant tourner autour de la broche, l'actionneur comportant une première came (26) et une seconde came (28) ; et
un élément de verrouillage (20) mobile par rapport à la broche entre une position de verrouillage et une position de libération en réponse à la rotation de l'actionneur, l'élément de verrouillage comportant
une première section (42) définissant un premier diamètre qui est constant le long d'une longueur de la première section,
une deuxième section (44) adjacente à la première section et définissant un deuxième diamètre qui diminue le long d'une longueur de la deuxième section, et
une troisième section (46) adjacente à la deuxième section et définissant un troisième diamètre qui est constant le long d'une longueur de la troisième section,
dans lequel la troisième section de l'élément de verrouillage peut venir en prise avec la lame de scie pour accoupler la lame de scie à la broche lorsque l'élément de verrouillage est dans la position de verrouillage,
dans lequel l'élément de verrouillage comporte en outre une première extrémité (32), une seconde extrémité (34) opposée à la première extrémité, et une tête arrondie (38) au niveau de la première extrémité, et une bride (40) adjacente à la tête arrondie, la bride ayant une forme en coupe transversale non circulaire,
dans lequel la troisième section s'étend de la seconde extrémité à la deuxième section,
dans lequel la première section s'étend de la bride à la deuxième section,
dans lequel la seconde came est conçue pour venir en prise avec la bride pour déplacer l'élément de verrouillage de la position de verrouillage vers la position de libération en réponse à la rotation de l'actionneur dans une première direction,
dans lequel la première came est conçue pour venir en prise avec la tête arrondie pour déplacer l'élément de verrouillage de la position de libération vers la position de verrouillage en réponse à la rotation de l'actionneur dans une seconde direction, et
dans lequel un ressort (70) fait tourner automatiquement la seconde came autour de la broche pour amener la première came à déplacer l'élément de verrouillage de la position de libération vers la position de verrouillage.

2. Serre-lame selon la revendication 1, dans lequel la deuxième section (44) est généralement tronconique.

3. Serre-lame selon la revendication 1, dans lequel la troisième section (46) est généralement cylindrique.

4. Serre-lame selon la revendication 1, dans lequel le deuxième diamètre diminue le long de la longueur de la deuxième section (44) à une vitesse constante.

5. Serre-lame selon la revendication 1, dans lequel l'élément de verrouillage (20) est mobile linéairement entre la position de verrouillage et la position de libération.

6. Serre-lame selon la revendication 1, dans lequel la longueur de la deuxième section (44) est inférieure à la longueur de la première section (42).

7. Serre-lame selon la revendication 1, dans lequel la longueur de la troisième section (46) est inférieure à la longueur de la deuxième section (44).

8. Outil électrique rotatif à mouvement alternatif (10) comprenant :
une broche (14) comportant une fente (30) conçue pour recevoir une lame de scie (18) ;
un actionneur (25) pouvant tourner autour de la broche, l'actionneur comportant une première came (26) et une seconde came (28) ;
un serre-lame (12) conçu pour accoupler de manière amovible la lame de scie à la broche, le serre-lame comportant un élément de verrouillage (20) mobile par rapport à la broche entre une position de verrouillage dans laquelle l'élément de verrouillage s'étend dans la fente et une position de libération dans laquelle l'élément de verrouillage est rétracté à partir de la fente, l'élément de verrouillage comportant
une première section (42) ayant une forme généralement cylindrique
une deuxième section (44) s'étendant à partir de la première section et ayant une forme généralement tronconique, et
une troisième section (46) s'étendant à partir de la deuxième section et ayant une forme généralement cylindrique,
dans lequel la troisième section de l'élément de verrouillage peut venir en prise avec la lame de scie pour accoupler la lame de scie à la broche lorsque l'élément de verrouillage est dans la position de verrouillage,
dans lequel l'élément de verrouillage comporte en outre une première extrémité (32), une seconde extrémité (34) opposée à la première extrémité, une tête arrondie (38) au niveau de la première extrémité, et une bride (40) adjacente à la tête arrondie, la bride ayant une forme en coupe transversale non circulaire,
dans lequel la troisième section s'étend de la seconde extrémité à la deuxième section,
dans lequel la première section s'étend de la bride à la deuxième section,
dans lequel la seconde came est conçue pour venir en prise avec la bride pour déplacer l'élément de verrouillage de la position de verrouillage vers la position de libération en réponse à la rotation de l'actionneur dans une première direction,
dans lequel la première came est conçue pour venir en prise avec la tête arrondie pour déplacer l'élément de verrouillage de la position de libération vers la position de verrouillage en réponse à la rotation de l'actionneur dans une seconde direction, et
dans lequel un ressort (70) fait tourner automatiquement la seconde came autour de la broche pour amener la première came à déplacer l'élément de verrouillage de la position de libération vers la position de verrouillage.

9. Outil électrique à mouvement alternatif selon la revendication 8, dans lequel au moins une partie de la deuxième section (44) peut venir en prise avec la lame de scie (18) lorsque l'élément de verrouillage (20) est dans la position de verrouillage.

10. Outil électrique à mouvement alternatif selon la revendication 8, dans lequel la première section (42) définit un premier diamètre qui est constant le long d'une longueur de la première section, dans lequel la deuxième section (44) définit un deuxième diamètre qui diminue le long d'une longueur de la deuxième section, et dans lequel la troisième section (46) définit un troisième diamètre qui est constant le long d'une longueur de la troisième section,

11. Outil électrique à mouvement alternatif selon la revendication 10, dans lequel le deuxième diamètre diminue le long de la longueur de la deuxième section (44) à une vitesse constante.

12. Outil électrique à mouvement alternatif selon la revendication 10, dans lequel la longueur de la deuxième section (44) est inférieure à la longueur de la première section (42), et dans lequel la longueur de la troisième section (46) est inférieure à la longueur de la deuxième section.
